(19) Europäisches Patentamt
European Patent Office
Office européen des brevets

(11) **EP 2 112 575 B1**

(12) **EUROPEAN PATENT SPECIFICATION**

(45) Date of publication and mention of the grant of the patent:
**22.02.2012 Bulletin 2012/08**

(51) Int Cl.:
***G06F 3/01*** *(2006.01)*

(21) Application number: **08155139.2**

(22) Date of filing: **24.04.2008**

(54) **System and method for generating energy from activation of an input device in an electronic device**

System und Verfahren zur Erzeugung von Energie über die Aktivierung einer Eingabevorrichtung in einer elektronischen Vorrichtung

Système et procédé de génération d'énergie par l'activation d'un dispositif d'entrée dans un dispositif électronique

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(43) Date of publication of application:
**28.10.2009 Bulletin 2009/44**

(73) Proprietor: **RESEARCH IN MOTION LIMITED**
**Waterloo, Ontario N2L 3W8 (CA)**

(72) Inventor: **Faubert, Perry Allan**
**Kitchener Ontario N2A 4M1 (CA)**

(74) Representative: **Phillips, Emily Elizabeth et al**
**Kilburn & Strode LLP**
**20 Red Lion Street**
**London WC1R 4PJ (GB)**

(56) References cited:
**WO-A-2007/098274    US-A1- 2002 075 135**
**US-A1- 2003 222 536    US-A1- 2004 124 741**

**Description**

The disclosure herein generally describes a system and method for generating energy for an electronic device based on an external force applied to the device. In particular, the disclosure relates to generating a voltage for the device through an energy harvesting circuit associated with an input device, such as a key or touchpad.

Current wireless handheld mobile communication devices perform a variety of functions to enable mobile users to stay current with information and communications, such as e-mail, corporate data and organizer information while they are away from their desks.

Current handheld devices optimally are lightweight, compact and have a battery life extending over several hours. Battery life is preferred to be as long a possible. A display, its backlight and a communication module typically are significant sources of power drains on a power source (e.g. batteries) of current devices. Some systems have recharging systems for the batteries, such as solar cell arrays. Solar arrays allow a device to recharge batteries when the device is exposed to sufficient ambient light. However, such solar cell arrays need to be located in open areas in the casing of the device. Further, in order for the solar cells to generate sufficient energy, the device must be in a sufficiently well-lit environment.

There is a need for a system and method which addresses deficiencies in the prior art relating generally to powering systems.

US 2003/222536 discloses an electronic device such a telephone, PDA, or pager that includes a manually operable input such as an elastomeric key or button, or a touch screen that does not by itself provide substantial tactile feedback upon actuation, and also includes an electromechanical transducer that is capable of generating an impulse of mechanical energy that can be felt. In response to detecting actuation of the manually operable input the electromechanical transducer is driven to produce an impulse of mechanical energy that propagates to the manually operable input and provides tactile. feedback to a user

The description which follows and the embodiments described therein are provided by way of illustration of an example or examples of particular embodiments of the principles of the present disclosure. These examples are provided for the purposes of explanation and not limitation of those principles and of the disclosure. In the description which follows, like parts are marked throughout the specification and the drawings with the same respective reference numerals.

In a first aspect, a system for providing feedback signals relating to input signals provided to an electronic device may be provided. The system may comprise: an input device; a transducer coupled to the input device, said transducer having a first region operating as sensor and a second region operating as an actuator; an energy storage circuit coupled to said transducer; a feedback module coupled to said energy storage circuit, said feedback module configured to receive power from said energy storage circuit to generate a feedback signal through said second region of said transducer indicating activation of said input device on said electronic device based on a signal received from said input device, and further configured to provide a voltage generated from said first region of said transducer during said activation of said input device to said energy storage circuit.

In the system, the input device may be a touchpad; the transducer may be a piezoelectric element; and the feedback module may cause the transducer to vibrate upon receiving an activation signal relating to activation of the input device.

In the system, the energy storage circuit may provide the voltage to a capacitor provided with the feedback module.

In the system, the transducer may be set to vibrate with a force of less than 2 Newtons by the feedback module.

In the system, the feedback module may comprise transistors and a pulse width modulator circuit to drive the transistors to selectively cause the transducer to vibrate.

In the system, the feedback module may provide a voltage generated by the transducer to an energy storage circuit. The energy storage circuit may provide the voltage for the feedback module. In the system, the energy storage circuit may include a capacitor.

In the system, the feedback module may further comprise an energy recovery circuit to rectify the voltage for the energy storage circuit.

In the system, the feedback module may selectively apply a first voltage signal to the transducer to have it operate as a sensor and a second voltage signal to the transducer to have it operate as an actuator.

In the system, the pulse width modulator circuit may generate signals to selectively cause the feedback module to generate the first and said second voltage signals.

In the system, the transducer may located underneath the input device and may be attached to a support structure. In the system, the transducer may be attached to the support structure as a cantilever.

In the system, the transducer may be embedded in a substrate in the input device.

In the system, the transducer may be located around a key region of the touchpad.

In the system, the transducer may be located in ridges on the cover around key layouts of the touchpad.

In the system, the support structure may be mounted to a printed circuit board (PCB) of the device and may flex when a downward force is applied to the touchpad.

In other aspects, various sets and subsets of the above noted aspects are provided.

Briefly, a feature of an embodiment provides a system where a feedback mechanism is provided for an input device in an electronic device. The feedback may be a movement or motion, but it may be a visual and / or an audible signal. A transducer, associated circuitry and software are provided to monitor for activation of an input device. The transducer is used to provide a feedback signal for the input device. An additional feature harvests energy from the transducer, which is used to provide power for other features in the device.

**BRIEF DESCRIPTION OF THE DRAWINGS**

The disclosure and related embodiments will now be described, by way of example only, with reference to the accompanying drawings, in which:

Fig. 1      is a schematic representation of an electronic device having a touchpad and a feedback system in accordance with an embodiment;

Fig. 2      is a block diagram of internal components including the touchpad and the feedback system of the device of Fig. 1;

Fig. 3      is a top profile view of an embodiment of a portion of the touchpad of Fig. 2;

Fig. 4A     is a top cross-sectional exploded view of parts of a first embodiment of the key in the touchpad and the feedback system of Fig. 2;

Fig 4B      is a side cross-sectional view of the key in the touchpad in a first, unactivated position and the feedback system of Fig. 4A;

Fig 4C      is a side cross-sectional view of the key in the touchpad in a second, depressed position and the feedback system of Fig. 4A;

Fig. 5A     is a top cross-sectional exploded view of parts of a second embodiment the key in the touchpad and the feedback system of Fig. 2;

Fig 5B      is a side cross-sectional view of the key in the touchpad in a first, unactivated position and the feedback system of Fig. 5A;

Fig 5C      is a side cross-sectional view of the key in the touchpad in a second, depressed position and the feedback system of Fig. 5A;

Fig. 6      is block circuit diagram of a drive circuit associated with the feedback system of Fig. 2; and

Fig. 7      is a block circuit diagram of an.energy harvesting circuit associated with the feedback system of Fig. 2.

**DESCRIPTION OF PREFERRED EMBODIMENTS**

First, a description of elements in an embodiment in an electronic device are provided, followed by details on specific features of embodiments.

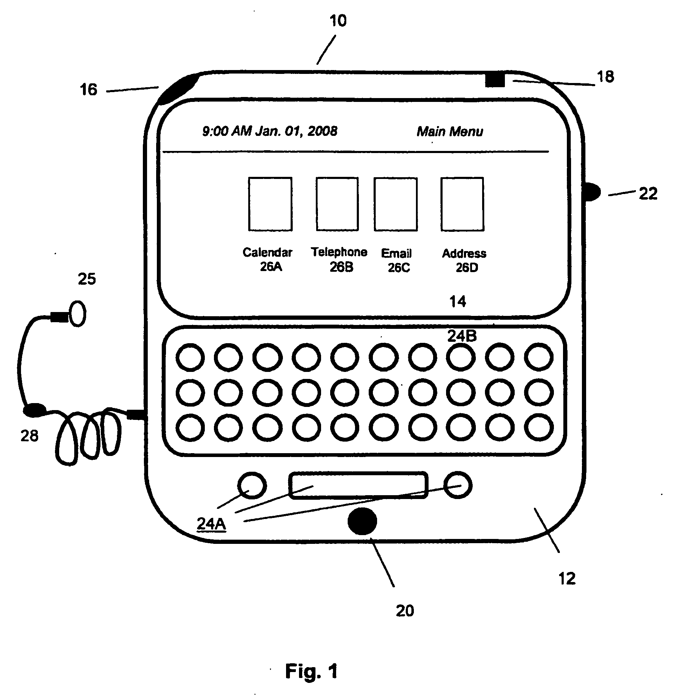

Referring to Fig. 1, an electronic device for receiving electronic communications in accordance with an embodiment of the present disclosure is indicated generally at 10. In the present embodiment, electronic device 10 is based on a computing platform having exemplary functionality of an enhanced personal digital assistant such as cellphone, e-mail, photographic and media playing features. It is, however, to be understood that electronic device 10 can be based on construction design and functionality of other electronic devices, such as smart telephones, desktop computers pagers or laptops having telephony equipment. In a present embodiment, electronic device 10 includes a housing 12, a display 14 (which may be a liquid crystal display or LCD), speaker 16, a light emitting diode (LED) indicator 18, a trackball 20, a trackwheel (not shown), an ESC ("escape") key 22, keys 24A, touchpad 24B, a telephone headset comprised of an ear bud 25 and a microphone 28. Trackball 20 and ESC key 22 can be inwardly depressed as a means to provide additional input signals to device 10.

It will be understood that housing 12 can be made from any suitable material as will occur to those of skill in the art and may be suitably formed to house and hold all components of device 10.

Device 10 is operable to conduct wireless telephone calls, using any known wireless phone system such as a Global System for Mobile Communications ("GSM") system, Code Division Multiple Access ("CDMA") system, Cellular Digital Packet Data ("CDPD") system and Time Division Multiple Access ("TDMA") system. Other wireless phone systems can include Bluetooth and the many forms of 802.11 wireless broadband, like 802.11a, 802.11b, 802.11 g, etc. that support voice. Other embodiments include Voice over IP (VoIP) type streaming data communications that can simulate circuit switched phone calls. Ear bud 25 can be used to listen to phone calls and other sound messages and microphone 28 can be used to speak into and input sound messages to device 10.

Various applications are provided on device 10, including email, telephone, calendar and address book applications. A graphical user interface (GUI) providing an interface to allow entries of commands to activate these applications is provided on display 14 through a series of icons 26. Shown are calendar icon 26A, telephone icon 26B, email icon 26C and address book icon 26D. Such applications can be selected and activated using the touchpad 24B and / or the trackball 20. Further detail on selected applications is provided below.

Keys 24A provide one or more distinct, fixed input keys for device 10. Typically, they may include at least part of keys in an alphanumeric character set. Touchpad 24B may be configured to provide an additional set of "keys" (or input areas) to augment keys 24A. The additional set of "keys" in touchpad 24B are diagrammatically represented in Fig. 1 as circles. A value for each key in touchpad 24B may be silk screened on the surface of touchpad 24B or may have a separate key cap affixed thereto. As such, touchpad 24B can be used to present a virtual key layout on device 10.

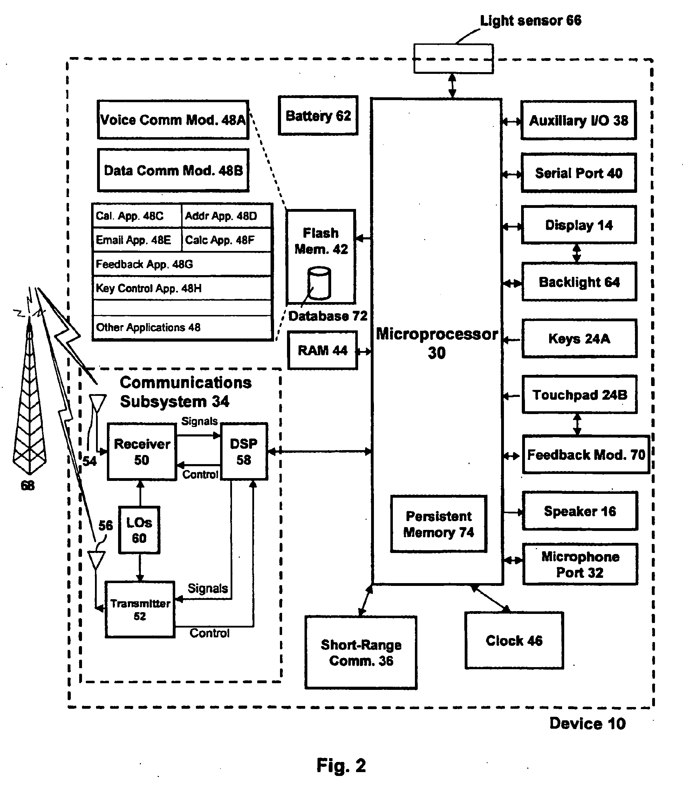

Referring to Fig. 2, functional elements, modules, components and systems of device 10 are provided. The functional elements are generally electronic or electro-mechanical devices mounted within a housing. Many devices are also mounted on an internal printed circuit board (PCB). In particular, microprocessor 30 is provided to control and receive almost all data, transmissions, inputs and outputs related to device 10. Microprocessor 30 is shown schematically as coupled to keys 24A, touchpad 24B, display 14 and other internal devices. Microprocessor 30 controls the operation of display 14, as well as the overall operation of device 10, in response to actuation of keys 24A and keys on touchpad 24B. Exemplary microprocessors for microprocessor 30 include microprocessors in the Data 950 (trade-mark) series, the 6200 series and the PXA900 series, all available at one time from Intel Corporation.

In addition to microprocessor 30, other internal devices of device 10 include: a communication subsystem 34; a short-range communication subsystem 36; touchpad 24B; and display 14; other input/output devices including a set of auxiliary I/O devices through port 38, a serial port 40, a speaker 16 and a microphone port 32 for microphone 28; and memory devices including a flash memory 42 (which provides persistent storage of data) and random access memory (RAM) 44; persistent memory 74; clock 46 and other device subsystems (not shown). Persistent memory 74 may be a separate memory system to flash memory 42 and may be incorporated into a component in device 10, such as in microprocessor 30. Additionally or alternatively, memory 74 may removable from device 10 (e.g. such as a SD memory card), whereas flash memory 42 may be permanently connected to device 10. Device 10 is preferably a two-way radio frequency (RF) communication device having voice and data communication capabilities. In addition, device 10 preferably has the capability to communicate with other computer systems via the Internet.

Operating system software executed by microprocessor 30 is preferably stored in a computer readable medium, such as flash memory 42, but may be stored in other types of memory devices (not shown), such as read only memory (ROM) or similar storage element. In addition, system software, specific device applications, or parts thereof, may be temporarily loaded into a volatile storage medium, such as RAM 44. Communication signals received by the mobile device may also be stored to RAM 44.

Microprocessor 30, in addition to its operating system functions, enables execution of software applications on device 10. A set of software applications 48 that control basic device operations, such as voice communication module 48A and data communication module 48B, may be installed on device 10 during manufacture or downloaded thereafter.

Communication functions, including data and voice communications, are performed through communication subsystem 34 and short-range communication subsystem 36. Collectively, subsystem 34 and subsystem 36 provide a signal-level interface for all communication technologies processed by device 10. Various other applications 48 provide the operational controls to further process and log the communications. Communication subsystem 34 includes receiver 50, transmitter 52 and one or more antennas, illustrated as receive antenna 54 and transmit antenna 56. In addition, communication subsystem 34 also includes processing module, such as digital signal processor (DSP) 58 and local oscillators (LOs) 60. The specific design and implementation of communication subsystem 34 is dependent upon the communication network in which device 10 is intended to operate. For example, communication subsystem 34 of device 10 may be designed to work with one or more of a Mobitex (trade-mark) Radio Network ("Mobitex") and the DataTAC (trade-mark) Radio Network ("DataTAC"). Voice-centric technologies for cellular device 10 include Personal Communication Systems (PCS) networks like Global System for Mobile Communications (GSM) and Time Division Multiple Access (TDMA) systems. Certain networks provide multiple systems. For example, dual-mode wireless networks include Code Division Multiple Access (CDMA) networks, General Packet Radio Service (GPRS) networks, and so-called third-generation (3G) networks, such as Enhanced Data rates for Global Evolution (EDGE) and Universal Mobile Telecommunications Systems (UMTS). Other network communication technologies that may be employed include, for example, Ultra Mobile Broadband (UMB), Evolution-Data Optimized (EV-DO), and High Speed Packet Access (HSPA), etc.

In addition to processing communication signals, DSP 58 provides control of receiver 50 and transmitter 52. For example, gains applied to communication signals in receiver 50 and transmitter 52 may be adaptively controlled through automatic gain control algorithms implemented in DSP 58.

In a data communication mode a received signal, such as a text message or web page download, is processed by the communication subsystem 34 and is provided as an input to microprocessor 30. The received signal is then further processed by microprocessor 30 which can then generate an output to display 14 or to an auxiliary I/O port 38. A user may also compose data items, such as e-mail messages, using keys 24, trackball 20, or a thumbwheel (not shown), and/or some other auxiliary I/O device connected to port 38, such as a keypad, a rocker key, a separate thumbwheel or some other input device. The composed data items may then be transmitted over communication network 68 via communication subsystem 34.

In a voice communication mode, overall operation of device 10 is substantially similar to the data communication mode, except that received signals are output to speaker 16, and signals for transmission are generated by microphone 28. Alternative voice or audio I/O subsystems, such as a voice message recording subsystem, may also be implemented on device 10.

Short-range communication subsystem 36 enables communication between device 10 and other proximate systems or devices, which need not necessarily be similar devices. For example, the short-range communication subsystem may include an infrared device and associated circuits and components, or a Bluetooth (trade-mark) communication module to provide for communication with similarly-enabled systems and devices.

Powering electronics of the mobile handheld communication device is power source 62 (shown in Fig. 2 as "battery"). Preferably, the power source 62 includes one or more batteries. More preferably, the power source 62 is a single battery pack, especially a rechargeable battery pack. A power switch (not shown) provides an "on/off" switch for device 10. Upon activation of the power switch an application 48 is initiated to turn on device 10. Upon deactivation of the power switch, an application 48 is initiated to turn off device 10. Power to device 10 may also be controlled by other devices and by internal software applications. Additional supplementary power may be provided by additional circuits (which may be referred to as modules) and components in device 10.

Device 10 is provided with feedback module 70 to harness at least some of the physical energy that is imparted on device 10. The harnessed energy is converted by the module into a voltage which may be used in other components and modules in device 10. One embodiment of feedback module 70 is provided as a circuit that monitors for physical activation of keys, such as virtual keys in touchpad 24B. Further detail on feedback module 70 is provided below.

Touchpad 24B is an input device, which is frequently provided in portable electronic devices. Touchpad 24B provides a surface on which a user is meant to glide his finger, in order to provide input signals to move a cursor generated on a graphical user interface (GUI). Touchpad 24B has a series of sensors located underneath the surface to sense a capacitance (and / or resistance) of the finger or capacitance (and / or resistance) between sensors.

Touchpad 24B may be implement in one or more of several circuits. One circuit provides a series of conductors in a grid where a series of row conductors are separated from a series of column conductors by an insulator layer. A high frequency signal is applied sequentially between pairs in the grid and the current that passes between the nodes is proportional to the capacitance. A user's finger provides a ground at points in the grid, resulting in a change in capacitance at that location. Alternatively, a capacitive shunt circuit may be provided to sense change in capacitance between a transmitter and receiver that are on opposite sides of the sensor. When a finger is placed between the transmitter and receiver, a ground is created which decreases the local capacitance, which can be detected as a position in touchpad 24B.

Display 14 has backlight system 64 to assist in the viewing of display 14, especially under low-light conditions. A backlight system is typically present in a LCD. A typical backlight system comprises a lighting source, such as a series of LEDs or a lamp located behind the LCD panel of the display and a controller to control activation of the lighting source. The lamp may be fluorescent, incandescent, electroluminescent or any other suitable light source known to a person of skill in the art. As the lighting sources are illuminated, their light shines through the LCD panel providing backlight to the display. The intensity of the backlight level may be controlled by the controller by selectively activating a selected number of lighting sources (e.g. one, several or all LEDs) or by selectively controlling the activation duty cycle of the activated lighting sources (e.g. a duty cycle anywhere between 0% to 100% may be used).

To assist with one method of adjusting the backlight level, light sensor 66 is provided on device 10. Sensor 66 is a light sensitive device which converts detected light levels into an electrical signal, such as a voltage or a current. It may be located anywhere on device 10, having considerations for aesthetics and operation characteristics of sensor 66. In one embodiment, an opening for light to be received by sensor 66 is located on the front cover of the housing of device 10 to reduce the possibility of blockage of the opening. In other embodiments, multiple sensors 66 may be provided and the software may provide different emphasis on signals provided from different sensors 66. The signal(s) provided by sensor(s) 66 can be used by a circuit in device 10 to determine when device 10 is in a well-lit, dimly lit or moderately-lit environment. This information can then be used to control backlight levels for display 14. It will be appreciated that a number of discrete ambient lighting levels may be recognized by sensor(s) 66. Progressions between levels may or may not be separated by a constant change in lighting intensity. In some embodiments, LED indicator 18 may be also used as a light sensor.

Device 10 is provided with the above noted input devices and feedback module 70. Feedback module 70 provides a physical motion for device 10 to enhance the feedback when an input device is activated on device 10. It may also provide a signal to that can be used to initiate a visual signal (e.g. a flashing light) or an audible signal (e.g. a "beep" from a speaker) via other modules in device 10. An additional feature of feedback module 70 may include a circuit to harness at least some of force that is imparted on device 10 during activation of the input device. The harnessed energy is converted by the module into a voltage which may be used in other components and modules in device 10.

One embodiment of feedback module 70 is provided as a circuit that monitors for physical activation of keys, such as virtual keys in touchpad 24B. Further detail on feedback module 70 is provided below.

Now, brief descriptions are provided on the applications 48 stored and executed in device 10. Voice communication module 48A and data communication module 48B have been mentioned previously. Voice communication module 48A handles voice-based communication such as telephone communication, and data communication module 48B handles data-based communication such as e-mail. In some embodiments, one or more communication processing functions may be shared between modules 48A and 48B. Additional applications include calendar 48C which tracks appointments and other status matters relating to the user and device 10. Calendar 48C is activated by activation of calendar icon 26A on display 14. It provides a daily/weekly/month electronic schedule of appointments, meetings and events entered by the user. Calendar 48C tracks time and day data for device 10 using processor 18 and internal clock 46. The schedule contains data relating to the current accessibility of the user. For example it can indicate when the user is busy, not busy, available or not available. In use, calendar 48C generates input screens on display 14 prompting the user to input scheduled events. Alternatively, notification for scheduled events could be received via an encoded signal in a received communication, such as an e-mail, SMS message or voicemail message. Once the data relating to the event is entered, calendar 48C stores processes information relating to the event; generates data relating to the event; and stores the data in memory in device 10.

Address book 48D enables device 10 to store contact information for persons and organizations. Address book 48D is activated by activation of address book icon 26D on display 14. Names, addresses, telephone numbers, e-mail addresses, cellphone numbers and other contact information is stored. The data can be entered through keys 24A and touchpad 24B and is stored in an accessible database in non-volatile memory, such as persistent storage 74 or flash memory 42 or any electronic storage provided in device 10.

Email application 48E provides modules to allow user of device 10 to generate email messages on device 10 and send them to their addressees. Application 48E also provides a GUI which provides a historical list of emails received, drafted, saved and sent. Text for emails can be entered. Email application 48E is activated by activation of email icon 26C on display 14.

Calculator application 48F provides modules to allow user of device 10 to create and process arithmetic calculations and display the results through a GUI.

Feedback application 48G works in conjunction with feedback module 70 and touchpad 24B to selectively set operation parameters, such as charging parameters, destination of charge parameters, feedback parameters etc., that may be controlled through software and variables used in conjunction with hardware/firmware elements in device 10.

Key control application 48H provides a series of templates to allow one or more of defined keys in touchpad 24B to have different assignments depending on a context of the operating environment of device 10. For example, one layout for keys in touchpad 24B is a standard QWERTY keyboard layout. One variant of a QWERTY layout is to present a layout of keys in lower case, as "qwerty" characters. An alternative QWERTY layout is to present a layout of keys in uppercase, as "QWERTY" characters. Other layouts include a layout for numeric keys, a layout for non-English language character sets (e.g. Japanese, French, Korean, Danish, and others).

Backlight system 64 may assist with viewing elements in display 14 in low light conditions.

Database 72 is provided to store data and records for applications 48 and other modules and processes. Database 72 may be provided in flash memory 42 or in another data storage element.

With some features of device 10 described above, further detail is now provided on notable aspects of an embodiment. In particular, an embodiment provides a system and method for providing a feedback signal to device 10 after an input device is activated on a device (typically by imparting a force on the input device). In an embodiment the input device may be a key 24A or touchpad 24B. Once activation of the input device is detected, a feedback signal is generated. Detection of the activation of the input device may be provided by the input device itself. Alternatively or additionally it may be provided from a feedback system. The feedback signal may be a physical buzz, visual indicator and / or audible signal. Also, an embodiment provides a feedback system and method for harvesting external energy provided to device 10 from an external force or pressure imparted to activate the key. The harvested energy may then be used by one or more components in device 10.

An embodiment has two components relating to the feedback system. The first component is a transducer which preferably operates with an input device and provides a feedback signal when the input device is activated. The second component is a system that harnesses the energy produced by the transducer when the input device is activated and provides it in some form to device 10. Each component is discussed in turn.

For the first component, the embodiment utilizes a transducer or any other device that converts a received physical motion into an electrical signal, such as a voltage or current, to detect the input force associated with an input device, such as a key.

In an embodiment the transducer is used as both the input device and the feedback device. In other embodiments, separate transducers may be provided. The transducer may contain piezoelectric material(s) or crystals which are used to generate a voltage in response to the force. In a piezoelectric crystal, internal positive and negative electrical charges are separated, but symmetrically distributed throughout the crystal, so that the crystal has an overall electrically neutral charge. When a mechanical stress is applied to the crystal, the charge symmetry is disturbed, and the resulting asymmetry in the charge in the crystal generates a voltage across the crystal. The generated voltage may be very high. For example, a voltage exceeding 12,000 V (at a low current) may be created in a 1 cm cube of quartz when a 2 kN (k Newtons) force is applied to it.

For the second component, as noted above, a piezoelectric element generates voltages when it is stressed. When a piezoelectric element is used as a sensor and when it is stressed, a voltage is generated which can be used as a signal indicating activation of an input area associated with the element. The voltage may be quite high. A circuit is provided to receive the voltage generated by the piezoelectric element and provide it to an appropriate circuit to charge or power other elements in device 10. To harness the voltage, the generated voltage may be provided to a rectifier circuit to convert the voltage to a DC value, which may then be stored and used by other circuits.

Further details are provided on piezoelectric elements. A piezoelectric material is a transducer and as such may be both a sensor, creating voltages as described above, and an actuator. As an actuator, the transducer can be used to provide a feedback signal. In particular, when a piezoelectric material is subjected to an electric voltage, a converse piezoelectric effect is produced, where the crystal deforms in shape in response to the voltage.

Different electrical / deformation effects can be exhibited by a piezoelectric crystal, depending on how it is cut, including transverse, longitudinal, and shear effects. In a transverse effect, when a force is applied along a neutral axis of the crystal, the piezoelectric material generates an electrical voltage in a perpendicular direction to the force. In both longitudinal and shear effects, the amount of voltage produced is proportional only to the applied force as applied and the direction of the force does not affect the voltage.

Exemplary piezoelectric materials include crystals, ceramics and polymers. Man-made piezoelectric ceramics include: barium titanate ($BaTiO_3$), lead titanate ($PbTiO_3$), lead zirconate titanate (typically referred to by the acronym "PZT"), potassium niobate ($KNbO_3$), lithium niobate ($LiNbO_3$), lithium tantalate ($LiTaO_3$), sodium tungstate ($Na_xWO_3$), polyvinylidene fluoride (PVDF) and P(VDF-TrFE) which is a co-polymer of PVDF. An optically transparent piezoelectric polymer may also be used, which is sometimes referred to as an electro active polymer (EAP). Some optically transparent piezoelectric polymers include: lanthanum-modified lead zirconate titanate (PLZT) and lead magnesium niobate-lead titanate (PMN-PT).

Electrically, a piezoelectric transducer has very high direct current (DC) output impedance and may be represented schematically in a circuit diagram as a capacitor or as a proportional voltage source and filter network. A voltage at the source is directly proportional to the applied force, pressure or strain.

A piezoelectric transducer may be provided in many forms, depending on how it will be used. As a unimorph form, a single piezoelectric element is provided, typically comprising of a ceramic material. As a bimorph form, a center substrate has a first piezoelectric elements provided on one face of the substrate and a second piezoelectric element provided on the opposite face of the substrate. One piezoelectric element would be configured to operate as an actuator and the other would be configured to operate as a sensor. In another form, a piezoelectric transducer may be provide in a (ductile) fibre form, which may be made from spinning and drawing a fibre of piezoelectric crystal material from a larger shaped block through a viscous suspension spinning process (VSSP) known in the art. Such fibres typically have a diameter of between about 10 microns to 250 microns or more. As a reference, a human hair has a diameter of approximately 100 microns. In one fibre form, a piezoelectric transducer may have a coefficient value of D33, where a voltage can be generated along its length. Alternatively, the fibres may be produced by dicing a thin sheet of piezoelectric material into rectanguloid strands having square or oblong cross sections in the range of 100 microns in cross-sectional length. The generated voltage may be a highly damped alternating AC voltage. Voltages in the range of 300 Vac (peak to peak) have been measured in response to an initial activation force. One or more sets of positive and negative electrode pairs are provided on the transducer to pick up voltage signals when the transducer is operating as a sensor and to provide voltages to the transducer when it is operating as an actuator. The location, arrangement and number of pairs of electrodes determine where forces can be detected in the transducer and where sections can be activated.

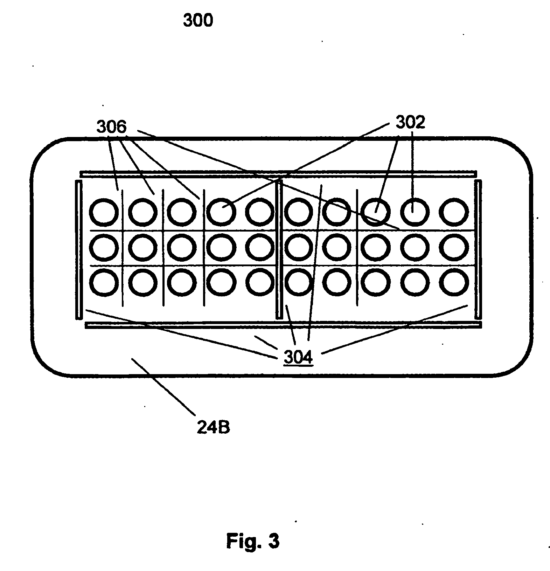

Now, further detail is provided on the use of piezoelectric elements as sensors in an embodiment. Referring to Fig. 3, a portion of touchpad 24B is shown at 300. Keys in touchpad 24B may be demarked by key outlines 302. The outlines may be silk screened on the surface of touchpad 24B. Alternatively, key caps may be provided. When caps are provided, they are preferably composed of material and have dimensions that do not substantially impede the capacitive sensing used by the sensing circuit(s) of touchpad 24B. Keys in touchpad 24B may be partitioned in groups, using physical barriers, ridges or separations, shown as ridges 304. An arrangement of piezoelectric elements 306 may be provided such that they run between "keys" within touchpad 24B in spaces between keys 302, and/or may be incorporated into ridges 304 that are provided within and/or outside the display region in touchpad 24B and / or are located above or underneath keys 302. Ridges 302 may define any area of interest in display 14B, for example an area relating to one or more keys in touchpad 24B. Ridges 304 may extend upwardly from the surface of touchpad 24B and may define a boundary that provides protection of touchpad 24B from being marked up from things striking it.

Touchpad 24B may incorporate a display component, such as a cholesteric LCD. A cholesteric LCD is bi-stable and can be programmed to have its display to be set and then the power may be disengaged from touchpad 24B. As such, no power or very little power is required to maintain an image of the key for touchpad 24B. In this configuration, a cholesteric substrate for touchpad 24B provides a pliable surface that may be deflected, thereby allowing it to be depressed when a key in touchpad 24B is pressed.

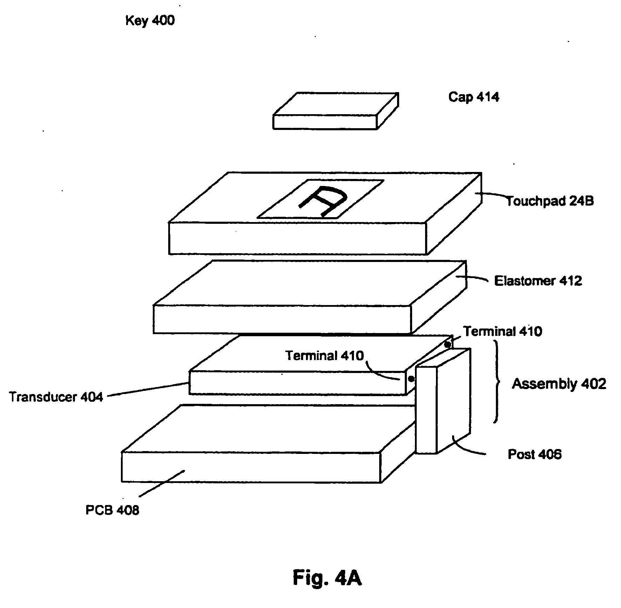

Referring to Fig. 4A, an exploded cross-sectional view of components of a first embodiment comprising the electro-mechanical elements underneath a key in touchpad 24B is shown. It will be appreciated that the embodiment may be for a single key, a group of keys or all keys in touchpad 24B. As noted before touchpad 24B has capacitive circuits which allow it to detect when an external "finger" is touching its surface. As such, the output signals can be analyzed to determine when a "key" is activated on touchpad 24B. In an embodiment, key 400 is shown. For a given key 400, assembly 402 is provided under touchpad 24B. Assembly 402 provides an additional transducer that allows energy imparted during the "pressing" of the key on touchpad 24B to be harvested and further provides a system to provide a feedback sense to the user when the key on touchpad 24B is activated. Assembly 402 includes: transducer 404 and post 406. Transducer 404 is the device which can both harvest the energy and provide the feedback sense. There may be multiple transducers provided in assembly 402. Post 406 is shown as being connected at one end of the transducer 404 and is affixed to printed circuit board (PCB) 408 of device 10. Terminals 410 on transducer 404 provide electrical contacts for connections to electrodes of transducer 404. As such, when transducer 404 is operating as a sensor, terminals 404 transmit any output voltage signals generated by transducer 404 to additional circuits, sub-circuits or modules in device 10. When transducer 404 is operating as an actuator, outside control signals are provided to terminals 404 to control activation of parts of transducer 404. There may be multiple terminals 410 each connecting to different electrodes of transducer 404. Elastomer 412 transmits the external (downward, inward) pressure applied to the touchpad 24B to assembly 402. For key shown in Fig. 4A, cap 414 is provided on top of the area for the key and is used to provide a positive physical feature to mark the key. Again, it may be have various shapes, sized and compositions in order to facilitate the capacitive sensing used by touchpad 24B.

It will be appreciated that other embodiments may be provided where a transducer is located in device 10. For example, in other embodiments an arrangement for a transducer and a key may not have certain elements, such as elastomer 412 or cap 414, so that the transducer is located directly under or within touchpad 24B. In other embodiments, a key assembly may be provided having one or more additional electromechanical switching mechanisms to provide additional signal(s) when the key is pressed (or not pressed), so that the transducer is operating strictly or mostly as an energy generating component. Further still, a key with a transducer may be provided in a section of device 10 that is separated from display 14 and touchpad 24B. In that embodiment, elastomer 412 may be placed directly above transducer 404 and no touchpad 24B is present.

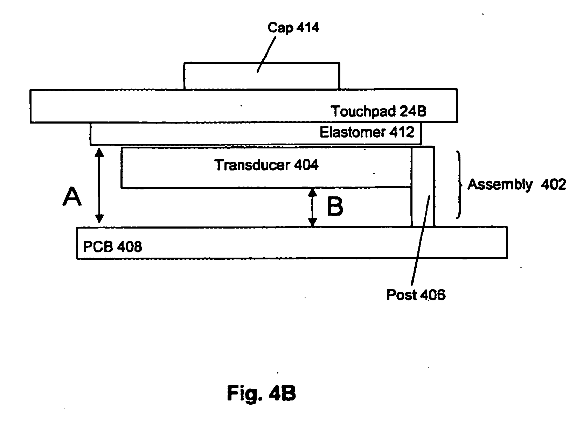

In Fig. 4B, cap 414 is shown as fitting over a region in touchpad 24B that has been designated as a key. Key cap 414 is generally a flat, thin, rigid piece of polycarbonate that is shaped to fit to be the size of a regular key. It may be transparent, tinted or opaque. One function of cap 414 is to transmit the inward, downward external force applied by the user when activating the key as provided in touchpad 24B to the transducer located underneath touchpad 24B. Cap 414 may be glued or welded individually to the key region above its local key area for touchpad 24B. Alternatively, cap 414 may be mounted on or molded with a substrate and the substrate may be laid on top of touchpad 24B. Again, use of cap 414 is dependent on how its presence affect the operation of an underlying detection circuit for touchpad 24B.

Cap 414 is shown as a separate component for a specific key. In other embodiments, a connected or continuous substrate in which cap 414 is an element may be provided that is laid over touchpad 24B and a region of key in touchpad 24B. In such a substrate, individual keys may be connected to each other by a web or other material. Such a web may be thinner in thickness than cap 414 and / or may be made from a (more) flexible material, in order to isolate movement of cap 414 from adjacent caps 414.

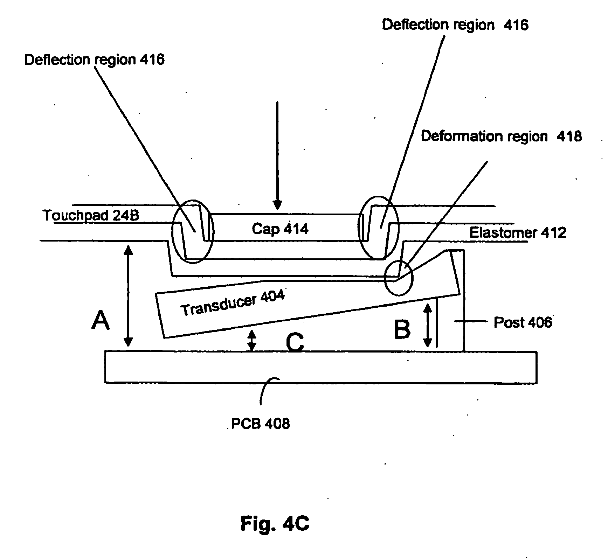

Referring to Figs. 4B and 4C, further detail is provided on activation of a key in an input device, such as touchpad 24B with a feedback module provided by assembly 402 underneath touchpad 24B. Elastomer 412 provides a flexible sheet that provides insulation between a bottom portion of touchpad 24B and a top portion of transducer 404.

Transducer 404 is a slab of piezoelectric material that is oriented in a horizontal position. Its specific shape, size, orientation and location may be custom-designed per physical and performance requirements of the touchpad and the feedback system. It may be encapsulated into a substrate. There may or may not be a gap between the bottom of elastomer 412 and the top of transducer 404. The distance between the bottom of elastomer 412 and the top surface of PCB 408 is noted as distance "A". Post 406 is a support structure that elevates transducer 404 above PCB 408 and attaches at one end to one end of transducer 404 and at the other end to PCB 408. As such, there is a gap of distance "B" exists between the bottom of transducer 404 and the top of PCB 408. Distance "B" is smaller than distance "A". In other embodiments, two or more ends of transducer 404 may be supported by two or more posts. Further, the posts may be affixed to other part of device 10, such as to its case. Further still, transducer 404 may be shaped such that one or more of its ends are connected to PCB 408 (or other locations on device 10) and a region in transducer 404 is exposed towards elastomer 412 in a comparable orientation to the generally flat slab of transducer 404. Additionally or alternatively an arrangement may be provided where the transducer is located in a spaced relationship in a different orientation to the touchpad and a mechanical device is provided to transmit the received motion to the location of the transducer. For example, the transducer may be oriented generally upright on PCB 408 and a combination of rods, gears, springs, etc. may be provided to translate and transmit the downward movement caused by the deflection in elastomer 412 to a horizontal movement that is provided to the surface of transducer 404. To complete a physical presentation of the key in touchpad 24B, cap 414 may be provided and is located on top of touchpad 24B above the area where transducer 404 is located.

Referring to Fig. 4C, as downward pressure is placed on cap 414, touchpad 24B deflects inward towards PCB 408. Sensors in touchpad 24B register the activation of the key associated with cap 414. As such, signals from touchpad 24B are generated which can be utilized to process a command associated with the activated key.

Meanwhile, as touchpad 24B deflects downward, elastomer 412 also deflects downward. As cap 414 evenly distributes the downward pressure across its surface at the edge of cap 414 on touchpad 24B, there is a deflection region as noted as deflection regions 416. As elastomer 412 is forced downward, it imparts a downward force on transducer 404. As transducer 404 is cantilevered at one end, its free end is deflected downward as well, such that the free end is a distance "C" from PCB 408. Distance "C" is smaller than distance "B". Also, as transducer 404 is being deflected, it may also be compressed by elastomer 412 in region 418 as shown. It will be appreciated that the amount of deflection and compression will depend on the composition of the materials of elastomer 412, transducer 404 and even cap 414. The degree of deflection 418 is shown in large scale to illustrate the deflective region. Other mounting arrangements in other assemblies 402 may be provided.

As noted before as transducer 404 is compressed, deflected and otherwise stressed, its internal electrical charges become asymmetrical, thereby generating a voltage within transducer 404. This voltage may be picked up through terminals 410 and then transferred to other components and modules in device 10. This additional signal may be used instead of, or in conjunction with, the activation signal provided by touchpad 24B.

If transducer 404 is situated in other locations around an input device, for example around touchpad 24B as noted in regards to Fig. 3, assembly 402 with its transducer may be customized to fit into its designed location and be provided with a support structure shaped to appropriately place it by touchpad 24B.

The terminal may be connected to a series of one or more pairs of electrodes (not shown) that are associated with one or more regions in the transducer. The pairs of electrodes may be individually or collectively monitored for voltage signals generated by the respective regions of the transducer when such regions are stressed. Similarly voltage signals can be applied to one or more of the pairs of electrodes to selectively activate the related region.

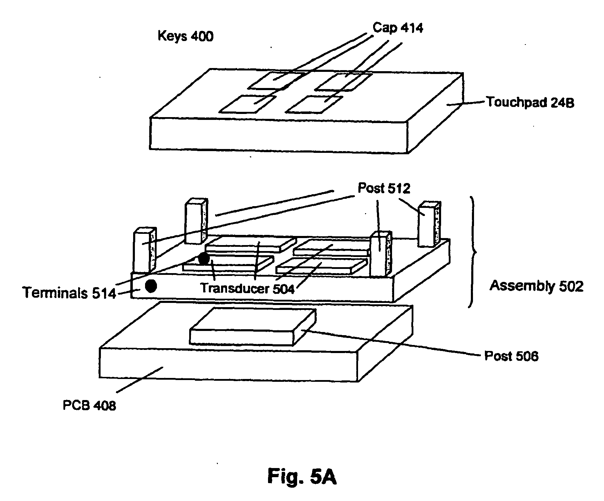

Referring to Fig. 5A, an exploded cross-sectional view of components of a second embodiment comprising the electro-mechanical elements underneath a key in touchpad 24B are shown. It will be appreciated that the embodiment may be for a single key, a group of keys or all keys in touchpad 24B. Assembly 502 is provided under touchpad 24B. Assembly 502 provides an additional set of transducers that allows energy imparted during the "pressing" of the key on touchpad 24B to be harvested and further provides a system to provide a feedback sense to the user when the key on touchpad 24B is activated. Assembly 502 includes: transducers 504, post 506, substrate 510 and posts 512. Transducers 504 are one or more slabs of piezoelectric material that is oriented in a horizontal position. Again, their specific shape, size, orientation and location may be custom-designed per physical and performance requirements of the touchpad and the feedback system. The piezoelectric material used may be a tape based material, such as those used in sound buzzer discs. The piezoelectric tape is approximately 100 um thick and may be bonded with a conductive epoxy to substrate 510. Additionally or alternatively, it may be soldered to substrate 510. Substrate 510 is preferably a relatively thin, flexible, metal shim. Its thickness is typically between approximately 200 um and 500 um. The substrate, when metallic, is used as a negative electrode for terminals 510. The top side of piezoelectric transducer 504 may be electroplated and the metal plating may be used as a positive electrode for terminals 510.

Other transducers that may be used include piezoelectric fibres (PFC) and piezoelectric patches, such as macrofibre composite (MFC) and foil-based types, which may be bonded to a metal shim. It is noted that fibres and patches may have an insulating polymer, Kapton tape or flex circuit material surrounding the piezoelectric material. In such configurations, conductive epoxy is generally not used and the negative terminal for terminals 514 is provided by an electrode pattern provided on the inside of the polymer and only the electrode ends are exposed for electrical connection(s).

Substrate 510 may be made of other materials, such as carbon fibre. Post 506 supports substrate 510 onto PCB 408. One or more sections of substrate 510 overhangs post 510 such that it is in free space above PCB 408. One or more posts 512 are located, in one embodiment, around edges of substrate 510. Posts 506 and 512 may be metal, plastic, hard rubber or other suitable weight bearing material. The upper end of posts 512 are in contact with a lower surface of touchpad 24B.

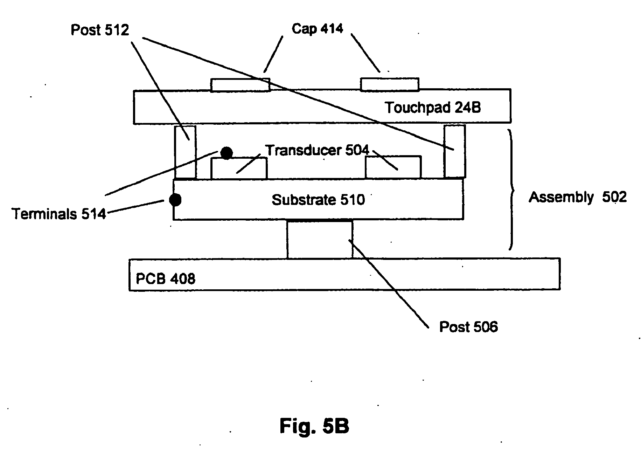

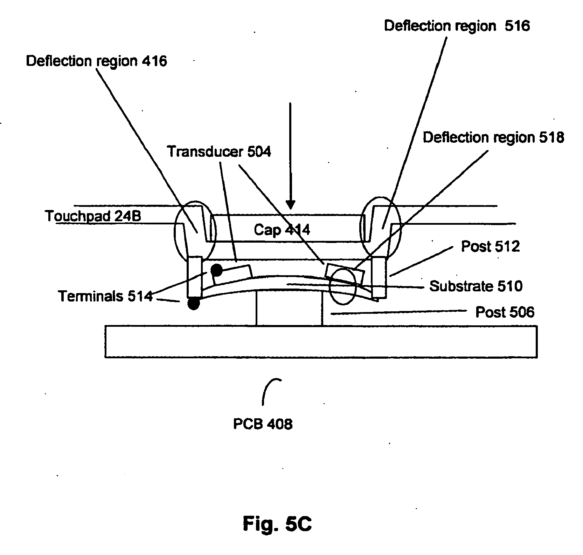

Referring to Fig. 5B, a vertical downward force applied to the touchpad 24B is transmitted through posts 512 to the contact edges of substrate 510. The interaction of the downward force applied, the location of posts 512 on substrate 510 and the location of the underlying post 506, causes substrate 510 to bend downward at certain sections, as shown. As transducer 504 is bonded to the substrate 510, it must stretch and deform. This deformation of transducer 504 produces a charge which is provided on terminals 514. As cap 414 evenly distributes the downward pressure across its surface at the edge of cap 414 on touchpad 24B, there is a deflection region as noted as deflection regions 516. As elastomer 412 is forced downward, it imparts a downward force on substrate 510 and since post 506 is present, substrate 510 is deflected downwards at its ends per region 518 as shown in Fig. 5C. One or more transducers 504 are stretched when substrate 510 bends, producing a charge which is picked up by terminals 514. In other embodiments, cap 414 is not provided.

It is noted that assembly 502 in Figs. 5A-5C does not include an elastomer between touchpad 24B and assembly 502; in other embodiments an elastomer can be provided. Also, either of assembly 402 (Figs. 4A-4C) and assembly 502 may be incorporated under other components of device 10, such as under display 14. Additional spacers and components, such as a porous foam, may be provided between any of a lens for touchpad 24B (or display 14) and the underlying components relating to assembly 402 (Figs. 4A to 4C) or assembly 502.

It is noted that in other embodiments, assembly 402/502 (Figs. 4A and 5A) and their related mechanical and support elements, may be placed about, around or underneath other components, such as display 14 or a flexible exterior sheet in the housing of device 10.

It will be appreciated that if transducer 404 or 504 spans more than one key, it may be provided with a series of pairs of electrodes which collectively are used to associate specific sections of transducer 404/504 with specific sections to its related input device, such as sections in touchpad 24B. The arrangement of electrodes facilitate determining a location of a pressure point being applied to transducer 404/504. For example, when a force is applied along a section of transducer 404/504, a series of signals will be generated in the nearest pairs of electrodes therein. The signals may be processed to determine, for example by triangulation strength analysis, to determine an approximate location of the applied force along transducer 404/504. Once a location is determined, then a local feedback signal can be provided to the appropriate section of transducer 404/504 through the associated pair of electrodes. The composition of transducer 404/504 and any related substrates provide various sensitivities to detect forces. Additional tuning circuits and software filters may be provided as needed to analyze signals received from the electrodes.

In an embodiment, transducer 404/504, at least when implemented as a piezoelectric element, provides both sensing and actuating functions for device 10. One sensing function is to sense activation of the related key or command in touchpad 24B and to harness the associated energy from the force applied to activate the key. One activation function is to provide a feedback signal to device 10 upon a certain trigger condition. The trigger condition may include the sensing of the activation of a key in touchpad 24B and / or the activation signal provided by touchpad 24B.

Generally, between about 3 and 6 N (Newtons) of force needs to be applied to a piezoelectric transducer, when it is configured to operate as an sensor, in order to trigger a positive actuator condition. When the transducer is configured operate with an input key, it is useful from a human interface point of view to provide a physical feedback signal through device 10, when the key input is activated. Generally, a force of approximately 0.7 N is provided, but it will be appreciated that feedback forces of up to 3 N or more may be provided, depending on requirements. As an exemplary range, a feedback signal of up to about 2.0 N can be provided. The feedback signal may be provided as a rumble signal (with a low frequency resonance around approximately 150 Hz) through the transducer to the appropriate pair of electrodes. Other frequencies may be provided, such as in a range between 50 Hz to 2000 Hz. The amplitude of the signal may depend on the transducer. It can be seen that the difference between the force provided from the input instance and the feedback force is:

$$\text{force difference} \quad = \quad \text{input force - feedback signal force}$$
$$= \quad (3 \text{ to } 6 \text{ N}) - 0.7 \text{ N}$$
$$= \quad \text{between about } 2.3 \text{ N and } 5.3 \text{ N}$$

$$\text{Equation 1}$$

The force may be a force felt in "free space", it may be a force as felt in the device and / or may also be an impulse force. One preferred characteristic of the response signal is to have a relatively sharp rise in the voltage to the piezoelectric material and a less steep decay. If the rise is too fast, more audible noise is generated than tactile feel. If the rise is too slow, then a rubbery feel is provided. In experimentation, a rise time of 300 us was noted providing a good sensation. For the decay, if too fast a decay is provided, then there is a second audible click. This may or may not be wanted. A decay that is too slow leaves the actuator not ready for a next event (the next tactile response). If a frequency signal of about 150 Hz to 250 Hz is provided, then the signal may be limited to one to five periods. The frequency may also be in the range of 100 Hz to 300 Hz.

The force applied may be harvested by feedback module 70. The energy (voltage) recovered by feedback module 70 may be used by device 10 in other circuits or sub-circuits. Exemplary uses include to recharge one or more batteries, to supplement a voltage signal required for a circuit or to replace a voltage source for a circuit.

When a piezoelectric element is provided in a sensor circuit, fairly high voltages need to be provided for the sensing circuit to excite the piezoelectric element. Typically, a sensing circuit requires approximately between 20 to 100 V to excite the element. In one embodiment, some or all of the recovered energy generated from the force difference may be provided to another circuit, for example a circuit that supplements or replaces a power source for the sensing circuit.

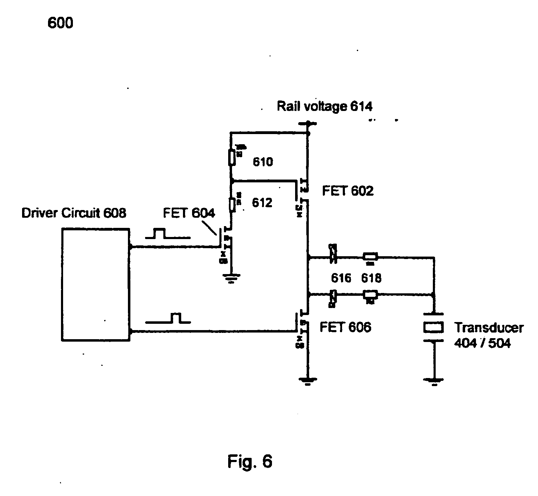

Further detail is now provided on a feedback mechanism provided by an embodiment. Referring to Fig. 6, as part of feedback module 70, circuit 600 provides the high voltage required to energize transducer 404 in order for transducer 404 to energize movement thereof. Circuit 600 may be provided for one or more pairs of terminals for transducer 404. One or more transducers may be associated with one or more circuits comparable to circuit 600. The movement can be used as a physical feedback signal upon activation of a key, such as a key in touchpad 24B. Transducer 404/504 may be in an activated state, where it vibrates at a particular frequency and amplitude, a bent state, where transducer 404 is bending and a resting state, where transducer 404/504 is flat, i.e. not activated. One signal that may be used to activate transducer 404 is an impulse signal. When transducer 404/504 is driven, it can contract or expand in length based on the polarity of the signal. In the embodiment, one reaction signal has transducer 404/504 expanding and contracting that pushes outwardly (upwardly) on touchpad 24B at a location when the user is currently pressing on transducer 404/504, thereby providing localized feedback to the input force.

In order to energize transducer 404/504, a positive voltage is applied to the positive terminal(s) of transducer 404. Voltage to the positive terminal(s) is controlled in part by signals provided by positive channel (P-ch) field effect transistor (FET) 602 is activated (i.e. "turned on") by the activation of negative channel (N-ch) FET 604, which itself is activated by the presence of a sufficiently high voltage present between its gate to source junction, which would be in the order of 2.5 volts. FET 604 is provided to translate the Vgs voltages present on the gate of FET 602 to a lower voltage that a logic circuit may use to control the output stage. N-ch FET 606 is turned on directly by logic level voltages on its gate-source junction.

In operation, an example of energizing transducer 404/504 is provided where transducer 404/504 is in a discharged state. The transducer 404/504 has an impedance which is primarily capacitive. For a monomorph piezoelectric element driven at 60 V to 200 V, the capacitance may be around 60 nF to 200 nF. For a multilayer piezoelectric element, the capacitance may be between about 1 uF and 5 uF, with a lower voltage drive voltage, around as low as approximately 10V. In operation, transducer 404 may be grounded by activating FET 606 full time while device 10 is powered, but grounding may not always be provided. An advantage of maintaining FET 806 in its active state is that transducer 404 will itself be placed in a known state (for example, where it is "relaxed", i.e., neither expanding or contracting). FET 602 may be set to be turned off by driving the Vgs voltage at the gate of FET 604 to a low voltage value.

To energize transducer 404/504, FET 606 is turned off by driving the gate of FET 606 with a logic low voltage signal, as provided by low voltage driver circuit 608, which provides a series of pulses at predetermined intervals or instances. The operation and elements of circuit 608 may be designed using circuits known in the art. For example, the pulses may be generated by a pulse width modulation circuit in circuit 608.

Once the gate of FET 606 is driven low, the voltage at rail 614 is provided to transducer 404. Voltage at rail 614 may be in the order of between about 10 V (or less) and 200 V (or more). The supply for rail 614 may be provided from a storage device (such as a battery or capacitor) or from an active power supply (including a booster circuit or a combination of both). In supplying the rail voltage to transducer 404, an embodiment may use one of at least three circuits between transducer 404/504 and drive transistors 602 and 606. First, no series diode or resistor may be provided. In this configuration, circuit 608 provides signals to control charge and discharge timing of transducer 404/504 capacitance. Second, one series resistor may be provided. This configuration may be used when only a single charge and discharge pulse for transducer 404/504 is required. Resistor values of 5 kohm to 10 kohm may be used with some piezoelectric bimorphs that require a series resistor. Third, a combination of diodes 616 and resistors 618 may be provided. A diode and resistor combination allow for different charge and discharge rates to be provided if a single charge and discharge pulse is used.

Turning back to operation of circuit 600, a delay of 50 ns may need to be added after turning off FET 606 to allow FET 606 sufficient "turn-off time before issuing the activation pulse to FET 604. After FET 606 is turned off, FET 604 is turned on by driving its gate with a logic high. When FET 604 turns on, a voltage resulting from a voltage divider comprising resistors 610 and 612 is used to drive the base of FET 602 base with a voltage around 5 V to 30 V, which is a voltage that is lower than the voltage at its source. As such FET 602 is turned on. The resistors 610 and 612 limit the maximum Vgs to comply with rating of FET 602 rating and keep the Vgs high enough to provide an adequate turn on voltage. The larger the value of resistors 610 and 612, the longer it will take to charge the gate capacitance at FET 602, which will slow the turn on of this transistor. In a PWM controlled system provided for circuit 608, lower values of resistors 610 and 612 may be used. Circuit 608 may generate a periodic activation signal to generate an predetermined cyclic activation signal for transducer 404/504. For example, a periodic PWM signal may be provided to cause transducer 404/504 to vibrate at a predetermined frequency indicative of a feedback signal. Alternatively, transducer may be provided with an impulse feedback signal created by the PWM to mimic a button click as feedback.

When FET 602 turns on, transducer 404/504 is charged to the voltage at supply rail 614 with a ramp signal that may be governed by either a PWM duty cycle provided by circuit 608 or a series resistor provided between rail 614 and transducer 404/504 as noted above. When transducer 404/504 is so charged, it is operating as an actuator, and hums and vibrates, providing a feedback signal relating to its activation. For example, referring to Fig. 5A, transducer 404/504 may vibrate along one (or more) of its axis while attached to post 406 when it is placed in its active state.

To place transducer 404/504 back to its rest state, FET 802 is turned off by driving the gate of FET 604 low. At this point, transducer 404/504 will be held in its bent state. To move transducer 404/504 back to its original rest state, FET 606 is turned on by driving the base of FET 606 with a logic high voltage signal. Preferably, for circuit 600, a delay of approximately 100 ns delay should be provided from the time of turning off FET 602 and turning on FET 606. Such a delay assists in preventing "shoot through" for the P and N channel FETs. The delay can be adjusted to suit the individual delays of the transistor used. The discharge time and profile required may be controlled either by PWM duty cycle or by a series resistor provided between rail 614 and transducer 404/504 as noted.

Adjustments and variations on the circuit may be provided to suit other implementation needs. In circuit 600, if FETs 602 and 606 were to be turned on at the same time, the "shoot though" current would be limited by the Rds of FETs 602 and 606. If the connection between the drains of FET 602 and FET 606 were to be removed, the current would be limited by the circuits comprising diodes 616 and resistors 618. One alternative drive circuit inserts a resistor (not shown) between diodes 616 as to not directly connect the drains of FET 602 and 606. The added resistor between the two drains of FETs 602 and 606 would limit the "shoot through" current. Another alternative circuit would be to replace FET 606 with a resistor (not shown). In the alternative circuit, the added resistor between the two drains of FETs 602 and 606 would limit the current. Such a resistor would controls the rise time if a PWM is not used, and may be removed or reduced if PWM is used. Other alternatives would replace any of FET 602, FET 604 and their associated resistors with a single resistor connecting fibre 302 to voltage rail 614. This alternation would control the rise time of the charge, but FET 606 would still control the discharge time. A series resistor in line with FET 606 or sufficient PWM signal may be provided to control the discharge time. Yet another alternative is to control the rise time of rail voltage 614 by circuit 608. A circuit would be provided to modulate the output voltage of the switch mode power supply creating rail voltage 614. In other embodiments, other active devices, such as bipolar transistors may be used in addition to or instead of FETs as shown. Such circuits may have similar topologies or different topologies to the circuits shown herein.

Exemplary guidelines for charge and discharge times are as follows. For charging, a charging cycle time of about 300 us has been observed to provide a good click feeling. If the charge time is longer, then the click feeling is more "rubbery" and not as connected to the activation of the related key area. The slower the ramp, the more rubbery the feeling. If the ramp is too quick, transducer 404/504 has been observed to create more of an audible click instead of a "click" that mimics a click or detente of a plastic key typically used on an electronic device.

For discharging, a feedback can be provided to mimic a click that is heard when a depressed key on an electronic device is released by a user. However, this feedback may not typically be desired. As such, a discharge rate may be selected to be sufficiently slow so that transducer 404/504 does not make a loud click when it moves back to its original position, but also sufficiently fast to be ready for the next charge cycle. It has been observed that a discharge time between around 3 ms, but more than 1 ms satisfies these parameters.

The value of the cycle times may be controlled by one or more of the associated circuitry and feedback application 48G.

It will be appreciated that it may be preferable to identify an appropriate portion of transducer 404/504 which should provide a localized feedback signal responsive to the location of the applied force by the user. The location is preferably sufficiently close to the location of the applied force. This may be done by analysis of the signal provided from the transducer. As noted earlier, digital signal processing may be conducted on voltage signals provided from the pairs of electrodes for the transducer in order to determine a location of the input force in touchpad 24B.

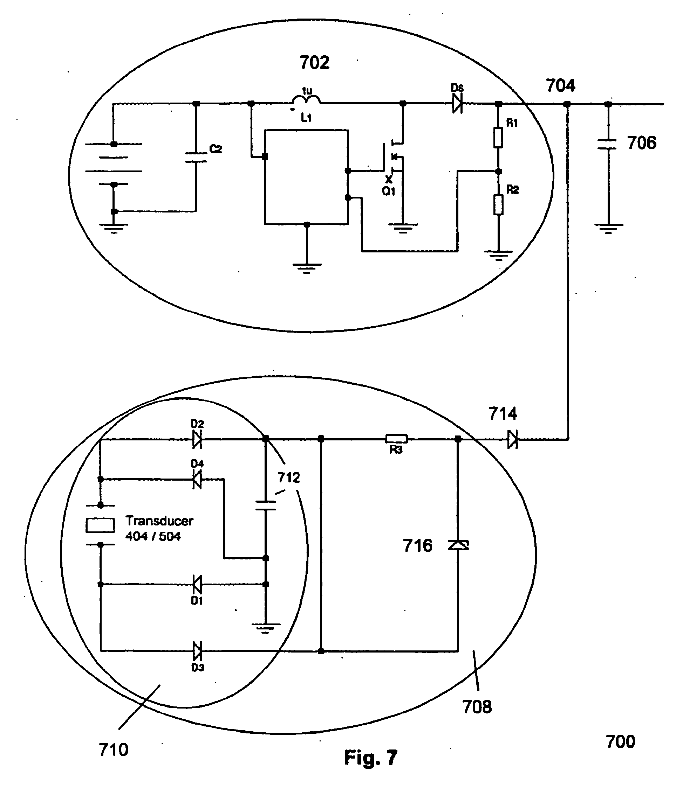

Further detail is now provided on the second component system (namely an energy recovery system) relating to an embodiment. In particular, as noted above, transducer 404/504 (Fig. 7) may be used as a sensor. As such, as described earlier, when a force is applied to it, transducer 404/504 generates a voltage. This voltage may be harnessed. .

Referring to Fig. 7, as a further part of feedback module 70, circuit 700 is provided and shows a drive and storage circuit, which may be used to provide a rail voltage 614 (Fig. 6) for transducer 404/504. One or more transducers may be associated with one or more circuits comparable to circuit 700. Circuit 702 is an asynchronous boost converter circuit that provides at least a portion of the voltage for rail 614 (Fig. 6), in a known power supply circuit layout. The output voltage from circuit 702 at node 704 is provided to charge capacitor 706. The energy stored in capacitor 706 may be provided, when triggered, to circuit 600. For example, an output from capacitor 706 may be provided to supply at least part of rail voltage 614 (Fig. 6). Circuit 708 provides a full-wave rectifier circuit 710 to charge capacitor 712 to maximum potential as provided for circuit 708. The input voltage for circuit 710 is provided from transducer 404/504 and the voltages that it generates while activated. Diode 714 allows the outputs from circuits 702 and 708 to charge capacitor 706 simultaneously without contention. Zener diode 716 protects against over-charging of capacitor 706 from voltages produced by transducer 404/504. Other harnessing circuits may be provided for other components in device 10. The energy recovery system may receive signals from one or more pairs of terminals for transducer 404/504 and may store the energy for an activation circuit for one or more of the pairs of terminals.

It will be appreciated that the embodiments relating to devices, modules, applications and systems may be implemented in a combination of electronic hardware, firmware and software. The firmware and software may be implemented as a series of processes and / or modules that provide the functionalities described herein. Interrupt routines may be used. Data may be stored in volatile and non-volatile devices described herein and be updated by the hardware, firmware and / or software. Some of the processes may be distributed.

As used herein, the wording "and / or" is intended to represent an inclusive-or. That is, "X and / or Y" is intended to mean X or Y or both.

The present disclosure is defined by the claims appended hereto, with the foregoing description being merely illustrative of a preferred embodiment of the present disclosure. Those of ordinary skill may envisage certain modifications to the foregoing embodiments which, although not explicitly discussed herein, do not depart from the scope of the present disclosure, as defined by the appended claims.

## Claims

1. A system for providing a feedback signal or signals for an input signal or signals provided to an electronic device (10), comprising:

   an input device (24B);
   a transducer (414) coupled to the input device, the transducer having a first region operating as sensor and a second region operating as an actuator;
   an energy storage circuit (708, 706) coupled to the transducer:
   a feedback module (70) coupled to the energy storage circuit, the feedback module configured to receive power from the energy storage circuit (708, 706) to generate a feedback signal through the second region of the transducer (414) indicating activation of the input device (24B) on the electronic device (10) based on a signal received from the input device (24B), and further configured to provide a voltage generated from the first region of the transducer (414) during the activation of the input device (24B) to the energy storage circuit.

2. The system as claimed in claim 1, wherein:

   the input device (24B) is a touchpad:
   the transducer (414) is a piezoelectric element; and
   the feedback module (70) is configured, to cause the transducer to vibrate upon receiving an activation signal relating to activation of the input device.

3. The system as claimed in claim 1 or claim 2, wherein the energy storage circuit (708, 706) comprises a capacitor (706).

4. The system as claimed in claim 2 or claim 3. wherein the second region of the transducer (414) is set to vibrate with a force of less than 2 Newtons by the feedback module upon receiving the activation signal.

5. The system as claimed in claim 4, wherein the second region of the transducer (414) is set to vibrate with a frequency of between 100 Hz and 300 Hz upon receiving the activation signal.

6. The system as claimed in claim 5, wherein the second region of the transducer (4t4) is set to vibrate for between 1 and 5 periods at the frequency.

7. The system as claimed in any one of claims 4 to 6, wherein the second region of the transducer (414) is set to be activated with a rise time of approximately 300 $\mu$s.

8. The system as claimed in any one of claims 2 to 7, wherein the feedback module (70) comprises a plurality of transistors (602, 604, 606) and a pulse width modulator circuit (608) configured to drive the plurality of transistors (602, 604, 606) to selectively cause the transducer (414) to vibrate upon receiving the activation signal.

9. The system as claimed in any one of claims 1 to 8, wherein the feedback module (70) further comprises un energy recovery circuit (710) configured to rectify the voltage for the energy storage circuit (70).

**10.** The system as claimed in any one of claims 1 to 9, wherein:

the second region of the transducer (414) also selectively operates in a second state as a sensor and the feedback module (70) is configured to selectively apply a first voltage signal to the second region of the transducer (414) to have the second region operate as the actuator and a second voltage signal to the second region to have the second region operate as the sensor and to provide a voltage generated by the second region during the activation of the input device to the energy storage circuit (70).

**11.** The system as claimed in claim 10, wherein the pulse width modulator circuit (608) is configured to generate signals to cause the feedback module (70) to selectively generate the first and the second voltage signals.

**12.** The system as claimed in any one of the preceding claims, wherein the transducer (414) is located underneath the input device (24B) and is attached to a support structure (406).

**13.** The system as claimed in claim 12, wherein the transducer (414) is attached to the support structure (406) as a cantilever.

**14.** The system as claimed in any one of claims 1 to 11, wherein the transducer (414) is embedded in a substrate in the input device (24B).

**15.** The system as claimed in any one of claims 1 to 11, wherein the transducer (414) is located around a key region of the input device (24B) comprising a touchpad.

**16.** The system as claimed in any one of claims 1 to 11, wherein the transducer is located in ridges (304) on a cover around key layouts of the input device (24B) comprising a touchpad.

**17.** The system as claimed in claim 2 of 13, wherein the support structure (406) is mounted to a printed circuit board 'PCB' of the device and is configured to flex when a downward force is applied to the touchpad.

**18.** An electronic device having a system according to any one of claim 1 to 17.


**Patentansprüche**

**1.** System zum Vorsehen eines Feedback-Signals oder von Feedback-Signalen für ein Eingangssignal oder -signale, das/die an eine elektronische Vorrichtung (10) geliefert wird/werden, das aufweist:

eine Eingabevorrichtung (24B);
einen Transducer (414), der mit der Eingabevorrichtung verbunden ist, wobei der Transducer einen ersten Bereich hat, der als Sensor arbeitet, und einen zweiten Bereich hat, der als ein Aktuator arbeitet;
eine Energiespeicherschaltung (708, 706) die mit dem Transducer verbunden ist;
ein Feedback-Modul (70), das mit der Energiespeicherschaltung verbunden ist, wobei das Feedback-Modul konfiguriert ist, Leistung von der Energiespeicherschaltung (708, 706) zu empfangen, um ein Feedback-Signal über den zweiten Bereich des Transducers (414) zu erzeugen, das eine Aktivierung der Eingabevorrichtung (24B) in der elektronische Vorrichtung (10) anzeigt, basierend auf einem Signal, das von der Eingabevorrichtung (24B) empfangen wird, und weiter konfiguriert ist, eine Spannung, die erzeugt wird von dem ersten Bereich des Transducers (414) während der Aktivierung der Eingabevorrichtung (24B), an die Energiespeicherschaltung zu liefern.

**2.** System gemäß Anspruch 1, wobei:

die Eingabevorrichtung (24B) ein Touchpad ist;
der Transducer (414) ein piezoelektrisches Element ist; und
das Feedback-Modul (70) konfiguriert ist, um den Transducer zu einem Vibrieren zu veranlassen bei Empfang eines Aktivierungssignals, das eine Aktivierung der Eingabevorrichtung betrifft.

**3.** System gemäß Anspruch 1 oder Anspruch 2, wobei die Energiespeicherschaltung (708, 706) einen Kondensator (706) aufweist.

4.  System gemäß Anspruch 2 oder Anspruch 3, wobei der zweite Bereich des Transducers (414) eingestellt ist, mit einer Kraft von weniger als 2 Newton zu vibrieren durch das Feedback-Modul bei einem Empfang des Aktivierungssignals.

5.  System gemäß Anspruch 4, wobei der zweite Bereich des Transducers (414) eingestellt ist, mit einer Frequenz zwischen 100 Hz und 300 Hz zu vibrieren bei Empfang des Aktivierungssignals.

6.  System gemäß Anspruch 5, wobei der zweite Bereich des Transducers (414) eingestellt ist, für zwischen 1 und 5 Perioden an der Frequenz zu vibrieren.

7.  System gemäß einem der Ansprüche 4 bis 6, wobei der zweite Bereich des Transducers (414) eingestellt ist, mit einer Anstiegszeit von ungefähr 300 μs aktiviert zu werden.

8.  System gemäß einem der Ansprüche 2 bis 7, wobei das Feedback-Modul (70) eine Vielzahl von Transistoren (602, 604, 606) und eine Pulsbreitemodulatorschaltung (608) aufweist, die konfiguriert ist, die Vielzahl von Transistoren (602 , 604, 606) anzusteuern, um selektiv zu veranlassen, dass der Transducer (414) bei Empfang des Aktivierungssignals vibriert.

9.  System gemäß einem der Ansprüche 1 bis 8, wobei das Feedback-Modul (70) weiter eine Energierückgewinnungsschaltung (710) aufweist, die konfiguriert ist zum Gleichrichten der Spannung für die Energiespeicherschaltung (70).

10. System gemäß einem der Ansprüche 1 bis 9, wobei:

    der zweite Bereich des Transducers (414) auch selektiv in einem zweiten Zustand als ein Sensor arbeitet; und das Feedback-Modul (70) konfiguriert ist, selektiv ein erstes Spannungssignal auf den zweiten Bereich des Transducers (414) anzulegen, damit der zweite Bereich als der Aktuator arbeitet, und ein zweites Spannungssignal auf den zweiten Bereich anzulegen, damit der zweite Bereich als der Sensor arbeitet, und eine Spannung, die durch den zweiten Bereich während der Aktivierung der Eingabevorrichtung erzeugt wird, an die Energiespeicherschaltung (70) zu liefern.

11. System gemäß Anspruch 10, wobei die Pulsbreitemodulatorschaltung (608) konfiguriert ist, um Signale zu erzeugen, um das Feedback-Modul (70) zu veranlassen, selektiv die ersten und zweiten Spannungssignale zu erzeugen.

12. System gemäß einem der vorhergehenden Ansprüche, wobei sich der Transducer (414) unter der Eingabevorrichtung (24B) befindet und an einer Tragestruktur (406) angebracht ist.

13. System gemäß Anspruch 12, wobei der Transducer (414) an der Tragestruktur (406) als eine Auskragung angebracht ist.

14. System gemäß einem der Ansprüche 1 bis 11, wobei der Transducer (414) in einem Substrat in der Eingabevorrichtung (24B) eingebettet ist.

15. System gemäß einem der Ansprüche 1 bis 11, wobei sich der Transducer (414) um einen Tastenbereich der Eingabevorrichtung (24B) befindet, die ein Touchpad aufweist.

16. System gemäß einem der Ansprüche 1 bis 11, wobei sich der Transducer in Erhöhungen (304) befindet auf einer Abdeckung um Tastenlayouts der Eingabevorrichtung (24B), die ein Touchpad aufweist.

17. System gemäß Anspruch 12 oder 13, wobei die Tragestruktur (406) auf einer Leiterplatte (PCB - printed circuit board) der Vorrichtung angebracht ist und konfiguriert ist, sich zu biegen, wenn eine nach unten gerichtete Kraft auf das Touchpad angewendet wird.

18. Elektronische Vorrichtung mit einem System gemäß einem der Ansprüche 1 bis 17.

**Revendications**

1.  Système destiné à fournir un signal ou des signaux de contre-réaction pour un signal ou des signaux d'entrée fourni(s) à un dispositif électronique (10), comprenant :

un dispositif d'entrée (24B) ;
un transducteur (414) relié au dispositif d'entrée, ledit transducteur ayant une première région fonctionnant en tant que capteur et une seconde région fonctionnant en tant qu'actionneur ;
un circuit de stockage d'énergie (708, 706) relié audit transducteur ;
un module de contre-réaction (70) relié audit circuit de stockage d'énergie, ledit module de contre-réaction étant configuré pour recevoir de l'énergie dudit circuit de stockage d'énergie (708, 706) afin de générer un signal de contre-réaction par l'intermédiaire de ladite seconde région dudit transducteur (414) indiquant l'activation dudit dispositif d'entrée (24B) sur ledit dispositif électronique (10) sur la base d'un signal reçu dudit dispositif d'entrée (24B), et configuré en outre pour fournir audit circuit de stockage d'énergie une tension générée par ladite première région dudit transducteur (414) pendant ladite activation dudit dispositif d'entrée (24B).

2. Système selon la revendication 1, dans lequel :

ledit dispositif d'entrée (24B) est un pavé tactile ;
ledit transducteur (414) est un élément piézo-électrique ; et
ledit module de contre-réaction (70) est configuré pour faire en sorte que ledit transducteur vibre lors de la réception d'un signal d'activation lié à l'activation dudit dispositif d'entrée.

3. Système selon la revendication 1 ou la revendication 2, dans lequel ledit circuit de stockage d'énergie (708, 706) comprend un condensateur (706).

4. Système selon la revendication 2 ou la revendication 3, dans lequel ladite seconde région dudit transducteur (414) est réglée pour vibrer avec une force inférieure à 2 Newtons par ledit module de contre-réaction lors de la réception dudit signal d'activation.

5. Système selon la revendication 4, dans lequel ladite seconde région dudit transducteur (414) est réglée pour vibrer à une fréquence comprise entre 100 Hz et 300 Hz lors de la réception dudit signal d'activation.

6. Système selon la revendication 5, dans lequel ladite seconde région dudit transducteur (414) est réglée pour vibrer entre 1 et 5 périodes à ladite fréquence.

7. Système selon l'une quelconque des revendications 4 à 6, dans lequel ladite seconde région dudit transducteur (414) est réglée pour être activée avec un temps de montée d'environ 300 µs.

8. Système selon l'une quelconque des revendications 2 à 7, dans lequel ledit module de contre-réaction (70) comprend une pluralité de transistors (602, 604, 606) et un circuit modulateur d'impulsions en largeur (608) configuré pour attaquer ladite pluralité de transistors (602, 604, 606) afin de provoquer sélectivement la vibration dudit transducteur (414) lors de la réception dudit signal d'activation.

9. Système selon l'une quelconque des revendications 1 à 8, dans lequel ledit module de contre-réaction (70) comprend en outre un circuit de récupération d'énergie (710) configuré pour redresser ladite tension destinée audit circuit de stockage d'énergie (70).

10. Système selon l'une quelconque des revendications 1 à 9, dans lequel :

ladite seconde région dudit transducteur (414) fonctionne également sélectivement dans un second état en tant que capteur ; et
ledit module de contre-réaction (70) est configuré pour appliquer sélectivement un premier signal de tension à ladite seconde région dudit transducteur (414) afin de faire fonctionner ladite seconde région en tant que ledit actionneur, et un second signal de tension à ladite seconde région afin de faire fonctionner ladite seconde région en tant que ledit capteur et pour fournir audit circuit de stockage d'énergie une tension générée par ladite seconde région pendant ladite activation dudit dispositif d'entrée (70).

11. Système selon la revendication 10, dans lequel ledit circuit modulateur d'impulsions en largeur (608) est configuré pour générer des signaux provoquant la production sélective par ledit module de contre-réaction (70) desdits premier et second signaux de tension.

**12.** Système selon l'une quelconque des revendications précédentes, dans lequel ledit transducteur (414) est situé en dessous dudit dispositif d'entrée (24B) et est fixé à une structure de support (406).

**13.** Système selon la revendication 12, dans lequel ledit transducteur (414) est fixé à ladite structure de support (406) en porte-à-faux.

**14.** Système selon l'une quelconque des revendications 1 à 11, dans lequel ledit transducteur (414) est intégré à un substrat dans ledit dispositif d'entrée (24B).

**15.** Système selon l'une quelconque des revendications 1 à 11, dans lequel ledit transducteur (414) est situé au voisinage d'une région de touche dudit dispositif d'entrée (24B) comprenant un pavé tactile.

**16.** Système selon l'une quelconque des revendications 1 à 11, dans lequel ledit transducteur est situé dans des nervures (304) d'un capot au voisinage des agencements de touches dudit dispositif d'entrée (24B) comprenant un pavé tactile.

**17.** Système selon la revendication 12 ou 13, dans lequel ladite structure de support (406) est montée sur une carte de circuit imprimé "PCB" dudit dispositif et est configurée pour se déformer lorsqu'une force orientée vers le bas est appliquée audit pavé tactile.

**18.** Dispositif électronique comportant un système selon l'une quelconque des revendications 1 à 17.

9:00 AM Jan. 01, 2008          Main Menu

Calendar   Telephone   Email   Address
26A        26B         26C     26D

**Fig. 1**

**Light sensor 66**

| | |
|---|---|
| **Voice Comm Mod. 48A** | **Battery 62** |
| **Data Comm Mod. 48B** | |

| | |
|---|---|
| Cal. App. 48C | Addr App. 48D |
| Email App. 48E | Calc App. 48F |
| Feedback App. 48G | |
| Key Control App. 48H | |
| Other Applications 48 | |

**Flash Mem. 42**

Database 72

**RAM 44**

**Microprocessor 30**

**Persistent Memory 74**

**Auxiliary I/O 38**

**Serial Port 40**

**Display 14**

**Backlight 64**

**Keys 24A**

**Touchpad 24B**

**Feedback Mod. 70**

**Speaker 16**

**Microphone Port 32**

**Communications Subsystem 34**

Signals

**Receiver 50**

**DSP 58**

Control

54

56

**LOs 60**

Signals

**Transmitter 52**

Control

68

**Short-Range Comm. 36**

**Clock 46**

**Device 10**

**Fig. 2**

Fig. 3

Key 400

Cap 414

Touchpad 24B

Elastomer 412

Terminal 410

Terminal 410

Transducer 404

Assembly 402

Post 406

PCB 408

**Fig. 4A**

**Fig. 4B**

**Fig. 4C**

Keys 400

Cap 414

Touchpad 24B

Post 512

Terminals 514

Transducer 504

Assembly 502

Post 506

PCB 408

**Fig. 5A**

Post 512
Cap 414
Touchpad 24B
Transducer 504
Assembly 502
Terminals 514
Substrate 510
PCB 408
Post 506

**Fig. 5B**

**Fig. 5C**

600

Fig. 6

**Fig. 7**

**EP 2 112 575 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2003222536 A